# EUROPÄISCHE PATENTANMELDUNG

(11) **EP 1 059 512 A2**
(43) Veröffentlichungstag der Anmeldung: **13.12.2000**
(21) Anmeldenummer: 00111078.2
(22) Anmeldetag: 02.06.2000
(51) Int. Cl.: G01D 5/16

(54) **Wellenwinkelsensor**

(30) Priorität: 08.06.1999 US 327995
(71) Anmelder: Mannesmann VDO Aktiengesellschaft, 60388 Frankfurt am Main (DE)
(72) Erfinder: VanZuilen, David M., Fremont, IN 46737 (US)
(74) Vertreter: Klein, Thomas, Dipl.-Ing.

(57) **Zusammenfassung**

Ein Sensor zum Messen von Wellenwinkelwerten einer drehbaren magnetisierten Welle verwendet mehrere Brückenschaltungen mit entsprechenden magnetoresistiven Sensorelementen, die von einem Magnet beabstandet in einem Ende der Welle angeordnet sind. Die Brückenschaltungen werden durch eine Basis gehalten, die einen Hohlraum zur Aufnahme des Endes der Welle mit dem Magneten enthält. Ein Gehäuse sichert die Welle und positioniert die Welle zur Drehung innerhalb des Hohlraums. Die Basis ist aus Polybutylenterephthalat geformt, das für magnetische Kraftlinien durchlässig ist, wodurch eine Kopplung des Magnetfelds der Welle an die magnetoresistiven Sensoren zur Messung eines Winkels der Welle um die Wellenachse gestattet wird.

## Beschreibung

Die vorliegende Erfindung betrifft einen sich zur Verwendung in einem Kraftfahrzeugumfeld eignenden Wellenwinkelsensor und insbesondere einen Wellenwinkelsensor, bei dem wegen reduzierter Empfindlichkeit gegenüber dem Abstand zwischen sich drehenden und feststehenden Elementen des Sensors magnetoresistives Material verwendet wird.

Bei der Verwendung von elektrischen und elektromechanischen Systemen in einem Kraftfahrzeug ist es oftmals notwendig, einen Winkelsensor zu verwenden, um eine Anzeige über einen Drehwinkel einer sich drehenden Komponente relativ zu einer feststehenden Komponente in dem Kraftfahrzeug zu verwenden. Um einige Beispiele zu nennen, werden elektrische Schaltungen verwendet: (1) beim Betrieb eines Drosselklappengehäuses und/oder Vergasers bezüglich der Positionierung eines Klappenventils, (2) in Verbindung mit dem Positionieren eines Gaspedals zur Zufuhr von Kraftstoff zu einem Motor, (3) in Verbindung mit der Messung eines Drehwinkels einer in einer Fahrgestellhöhen-Drehsensoreinrichtung verwendeten Welle, (4) in einem elektronischen Drosselklappengehäusesensor zum Regulieren von Kraftstoff zu einem Motor sowie (5) beim Betrieb von Bremse, Kupplung und dem Positionieren einer Gangauswahl. Es ist wünschenswert, wenn ein derartiges Erfassen eines Drehwinkels für optimalen Betrieb der obigen Komponenten des Kraftfahrzeugs präzise bewerkstelligt wird. Das Kraftfahrzeug stellt jedoch für den Einsatz von derartigen Sensoren wegen Schwingungen, Schmutz und Temperaturschwankungen sowie wegen mechanischer Probleme hinsichtlich Toleranz, Abstand, Verschiebung, Wellen- und Lagerabnutzung eine aggressive Umgebung dar. Eine weitere Schwierigkeit entsteht bei der Herstellung des Sensors für das Kraftfahrzeugumfeld, wobei ein Bedarf nach übermäßiger Präzision beim Zusammenbau des Sensors besteht.

Die obigen Probleme werden überwunden und andere Vorteile werden bereitgestellt, und zwar durch einen Winkelwellensensor, der gemäß der Erfindung eine drehbare Magnetwelle umfaßt, die neben einer Brückenschaltung mit einem magnetoresistiven (MR) Sensorelement, das einen Winkel des Flusses der Magnetwelle bestimmt, umfaßt. Vorzugsweise wird eine Doppelbrückenschaltung mit einem Paar der MR-Sensorelemente verwendet, wobei die beiden Brückenschaltungen zueinander um 45 Grad gedreht sind, um das Äquivalent von Sinus- und Cosinus-Anteilen eines Maßes des durch einen Magneten in dem Ende der Magnetwelle erzeugten Magnetfelds bereitzustellen. Eine Eigenschaft des MR-Sensors ist seine Fähigkeit, einen Magnetfeldwinkel zu messen und gleichzeitig gegenüber Verschiebung zwischen den sich drehenden und feststehenden Teilen des Sensors tolerant zu sein. Diese Toleranz gegenüber Verschiebung wird durch eine Herstellung des Sensors mit einer Basis aus Kunststoffmaterial erzielt, das gegenüber dem Magnetfeld im wesentlichen transparent ist, wobei die Basis eine Auflage für die Brückenschaltungen bereitstellt und auch einen Hohlraum zum Aufnehmen eines magnetisierten Endes der Magnetwelle bildet. Die Verwendung der Kunststoffbasis gestattet, den Sensor aus Schaltungskomponenten herzustellen, die später zusammengebaut werden, und wobei eine geringfügige Verschiebung von der optimalen Platzierung der Komponenten wegen der Toleranz des MR-Sensorelements gegenüber Verschiebung zwischen den sich drehenden und feststehenden Teilen des Sensors nicht mehr als einen vernachlässigbaren Fehler bei der Messung aufweist. Außerdem ist das Kunststoffmaterial gegenüber Feuchtigkeit widerstandsfähig und ist temperaturstabil.

Die oben erwähnten Gesichtspunkte und weitere Merkmale der Erfindung werden in der folgenden Beschreibung in Verbindung mit den beiliegenden Zeichnungsfiguren erläutert. Es zeigen:
- Figur 1: eine isometrische Ansicht eines zur Verwendung als ein Fahrgestellhöhen-Drehsensor konfigurierten Winkelsensors;
- Figur 2: eine Explosionsansicht des Winkelsensors von Figur 1;
- Figur 3: eine weitere Explosionsansicht des Winkelsensors von Figur 1;
- Figur 4: eine Explosionsansicht einer weiteren Ausführungsform des zur Verwendung als ein Drosselpositionssensor geeigneten Winkelsensors, wobei die Komponenten Seite an Seite gezeigt sind;
- Figur 5: ist eine Außenansicht des Winkelsensors von Figur 4;
- Figuren 6 und 7: Ansichten einer weiteren Ausführungsform der Erfindung, die sich zur Verwendung als elektronischer Drosselklappengehäusesensor eignet, von oben und unten; und
- Figuren 8 und 9: Kurven, die Ausgangssignale der MR-Sensoren zeigen.

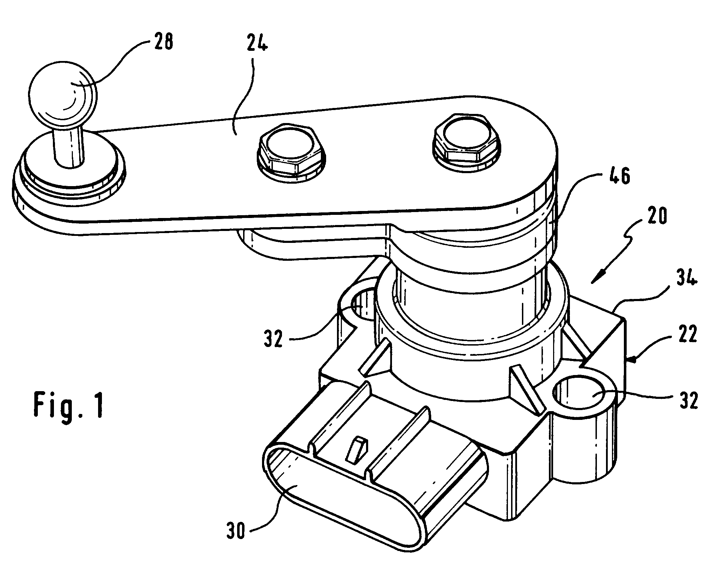

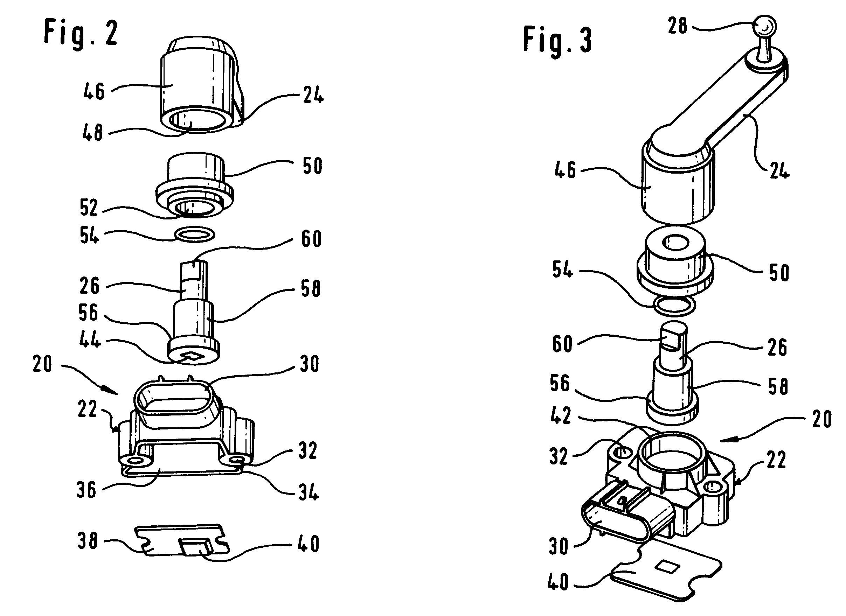

Unter Bezugnahme auf Figur 1 wird ein Sensor 20 gezeigt, der sich als ein Fahrgestellhöhen-Drehsensor (RCHS = Rotary Chassis Height Sensor) in Verbindung mit einer Verknüpfung eignet, die in einer Verbindung eines Kraftfahrzeuggestells mit den Rädern des Kraftfahrzeugs eingesetzt wird. Der Sensor umfaßt ein Gehäuse 22 und einen Hebelarm 24, der sich von einer Welle 26 (in Figur 2 gezeigt) zur Drehung um eine Achse der Welle 26 relativ zu dem Gehäuse 22 erstreckt. Am Ende des Arms 24 befindet sich ein Kugelgelenk 28 zur schwenkbaren Verbindung mit einem Arm des nicht gezeigten Stützgestänges des Kraftfahrzeugs, so daß Änderungen bei einer vertikalen Verschiebung des Fahrzeuggestells relativ zu dem Boden zu einem Schwenken des Arms 24 relativ zu dem Gehäuse 22 führt. Eine Buchse 30 sorgt für die Aufnahme des Steckers eines nichtgezeigten Stromkabels zum Aktivieren einer elektrischen Schaltung innerhalb des Sensors 20. Das Gehäuse 22 ist mit Bohrungen 32 zur Aufnahme von nichtgezeigten Montagefahnen versehen, durch die der Sensor 20 an einer Montagestütze gesichert wird, wie beispielsweise einem Rahmen des Fahrzeuggestells (nicht gezeigt).

Wie in Figuren 2 und 3 gezeigt, enthält das Gehäuse 22 eine Basis 34, die an ihrem Boden mit einem Hohlraum 36 zum Aufnehmen einer Leiterplatte 38 mit magnetoresistiver MR-Schaltung 40 darauf versehen ist. Die elektrische Verbindung mit der MR-Schaltung 40, die beispielsweise in Form einer Brücke konstruiert sein kann, erfolgt über die Buchse 30. Der obere Teil der Basis 34 definiert einen Napf 42 in Form eines zylindrischen Hohlraums zum Aufnehmen eines unteren Endes der Welle 26. Ein Permanentmagnet 44 ist an dem unteren Ende der Welle 26 gesichert und wird bei Einführen der Welle 26 in den Napf 42 innerhalb des Napfs 42 aufgenommen. Sowohl der Permanentmagnet 44 als auch die Brückenschaltung 40 werden bei Einführen der Welle 26 in den Napf 42 auf die Achse der Welle 26 ausgerichtet, so daß sich die Brückenschaltung 40 direkt unter dem Magneten 44 befindet und von diesem durch einen relativ kleinen Abstand oder eine relativ kleine Lücke, der bzw. die durch die Dicke des Bodens des Hohlraums 36 definiert ist, getrennt ist. Sowohl der Napf 42 als auch die Welle 26 sind mit kreiszylindrischen Oberflächen versehen, um eine Drehung der Welle 26 innerhalb des Napfes 42 zu gestatten.

Der Hebelarm 24 ist mit einer Basishülse 46 mit einem kreiszylindrischen Hohlraum 48 zur Aufnahme eines Abdeckungsgehäuses 50, das ebenfalls eine kreiszylindrische Form aufweist, konstruiert. Das Abdeckungsgehäuse 50 weist einen Hohlraum 52 zum Aufnehmen des oberen Endes der Welle 26 unter Zwischenschaltung eines O-Rings 54 um den oberen Teil der Welle 26 und an einen Flansch 56 der Welle 26 anstoßend auf Den Mittelpunkt der Welle 26 umgibt eine Muffe, die als ein Gleitlager 58 dient, das die Drehung der Welle 26 innerhalb des Abdeckungsgehäuses 50 ermöglicht. Das obere Ende der Welle 26 ist mit einer flachen Oberfläche ausgeführt, um einen Keil 60 in Konfiguration des Buchstabens D zu bilden. Der Keil 60 wird mit der Innenoberfläche des Hohlraums 48 an einem Basisendpunkt des Hebelarms 24 zusammengesteckt, wodurch eine Drehung des Arms 24 auf die Welle 26 übertragen wird.

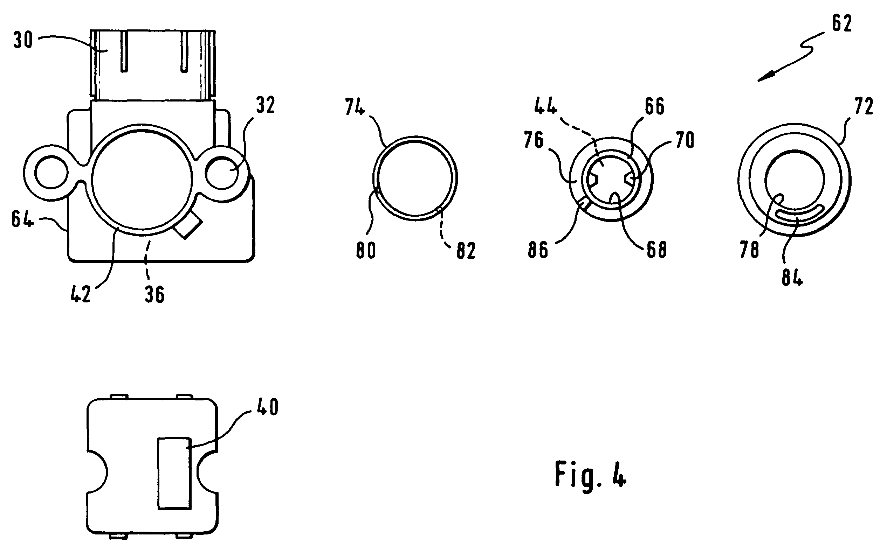

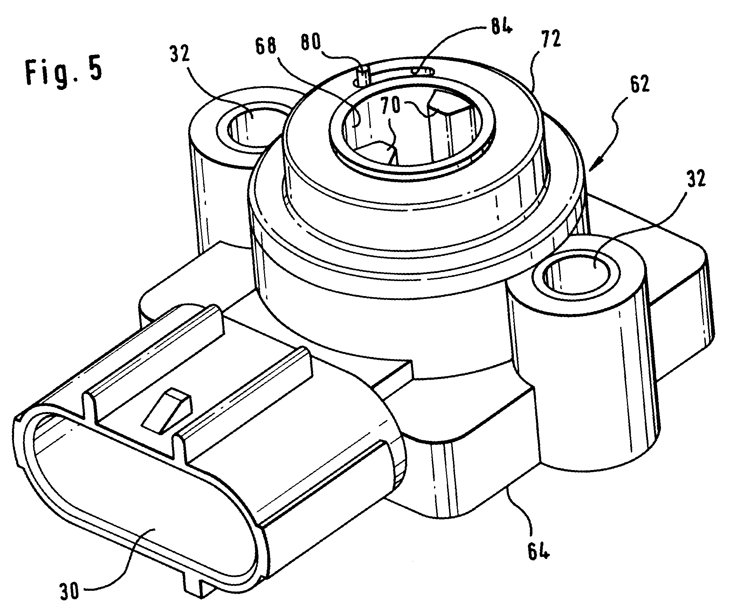

Unter Bezugnahme auf Figuren 4 und 5 wird eine alternative Ausführungsform der Erfindung als Sensor 62 gezeigt. Der Sensor 62 enthält eine Basis 64, die die Stromanschlußbuchse 30 trägt und die Montagebohrungen 32 enthält. Die Basis 64 enthält an ihrer Unterseite den Hohlraum 36 zur Aufnahme der MR-Schaltung 40 und enthält auch an ihrer Oberseite den Napf 42 zur Aufnahme einer einen Magnet tragenden Welle 66. Die Welle 66 ist eine relativ kurze Welle oder eine Stummelwelle und enthält eine obere Ausnehmung 68 mit einem Keil 70 zur Aufnahme einer nicht gezeigten externen Antriebswelle. Die Unterseite der Welle 66 trägt den Permanentmagneten 44 und positioniert den Magneten 44 bei Platzierung der Welle 66 in den Napf 42 in Ausrichtung auf die MR-Schaltung 40. Eine Abdeckung 72 ist an der Oberseite der Basis 64 gesichert. Bei Zusammenbau des Sensors 62 wird die Welle 66 in dem Napf 42 platziert, eine kreisförmige Feder 74 wird um die Welle 66 angeordnet und ruht auf einem Flansch 76 der Welle 66, und die Abdeckung 72 wird über der Welle 66 platziert, was es gestattet, daß ein Ende der Welle 66 durch eine Apertur 78 der Abdeckung 72 ragt. Laschen 80 und 82 erstrecken sich von der Feder 74 aus in einer axialen Richtung, um jeweils einen Schlitz 84 in der Abdeckung 72 und eine Kerbe 86 in dem Flansch 76 in Eingriff zu nehmen, um das Ausmaß der Drehung, das auf die Welle 66 ausgeübt werden kann, zu begrenzen. Die Feder 74 drückt gegen das Innere der Abdeckung 72 und gegen den Flansch 76 der Welle 66, um den Kontakt des Magneten 44 mit dem Boden des Napfes 42 sicherzustellen.

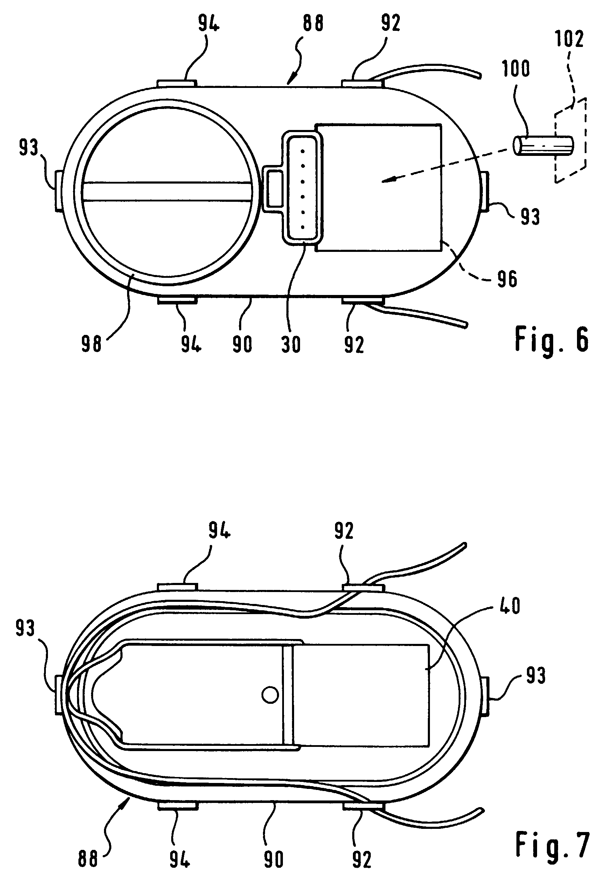

Unter Bezugnahme auf Figuren 6 und 7 wird eine alternative Ausführungsform des Sensors gezeigt, die als Sensor 88 angegeben ist. Der Sensor 88 enthält eine Basis 90, die die Buchse 30 zur Herstellung einer Verbindung mit einer externen Schaltung trägt. Der Sensor 88 weist das Merkmal auf, daß er nur teilweise zusammengebaut ist, was es einem Gerätehersteller gestattet, für den endgültigen Zusammenbau der Komponenten des Sensors 88 bei der Konstruktion einer Einrichtung, wie beispielsweise eines Vergasers, die den Sensor 88 als Teil der Gerätegesamtbaugruppe enthält, zu sorgen. In der folgenden Beschreibung wird der Zweckmäßigkeit halber auf den Vergaser Bezug genommen, wobei es sich versteht, daß die Beschreibung auch auf ein Drosselklappengehäuse zutrifft. Laschen 92, 93 und 94 erstrecken sich von der Basis 90 aus, um für den weiteren Anschluß von elektrischen Leitungen, wie beispielsweise Stromleitungen, an von der Basis 90 getragene Schaltungen zu sorgen. Insbesondere enthält eine derartige Schaltung die MR-Schaltung 40, die innerhalb eines in einer Rückseite der Basis 90 befindlichen Hohlraums 96 angeordnet ist.

Unter Bezugnahme auf das Beispiel der Verbindung des Sensors mit einem Vergaser ist es bei der Konstruktion bestimmter Formen von Vergasern üblich, zum Positionieren eines Ventilelements innerhalb des Vergasers, einen nichtgezeigten Elektromotor einzusetzen. Ein Montagegebiet 98 ist an der Basis 90 vorgesehen und dient zum Halten des Elektromotors. Nach einem Fixieren der Basis 90 an einem Rahmenelement des Vergasers ist der Elektromotor zur mechanischen Ineingriffnahme mit einer Antriebswellenbaugruppe des Vergaserventils positioniert. Eine einen Magneten tragende Welle 100 ist innerhalb eines schemenhaft angedeuteten geeigneten Gehäuses 102 zum Positionieren der Welle 100 in Ausrichtung auf die MR-Schaltung 40 gestützt. Aufgrund der Toleranz der MR-Sensorschaltung gegenüber der Positionierung des Magneten, wie hier beschrieben wird, ist beim Anordnen der einen Magneten tragenden Welle 100 relativ zu der MR-Schaltung 40 keine große Präzision erforderlich, so daß das Gehäuse 102 auch mit einem Rahmenelement des Vergasers verbunden werden kann. Dadurch entfällt die Notwendigkeit, daß das Gehäuse 102 und die Basis 90 vor dem endgültigen Zusammenbau des Vergasers und seiner Zusatzgeräte miteinander verbunden werden müssen.

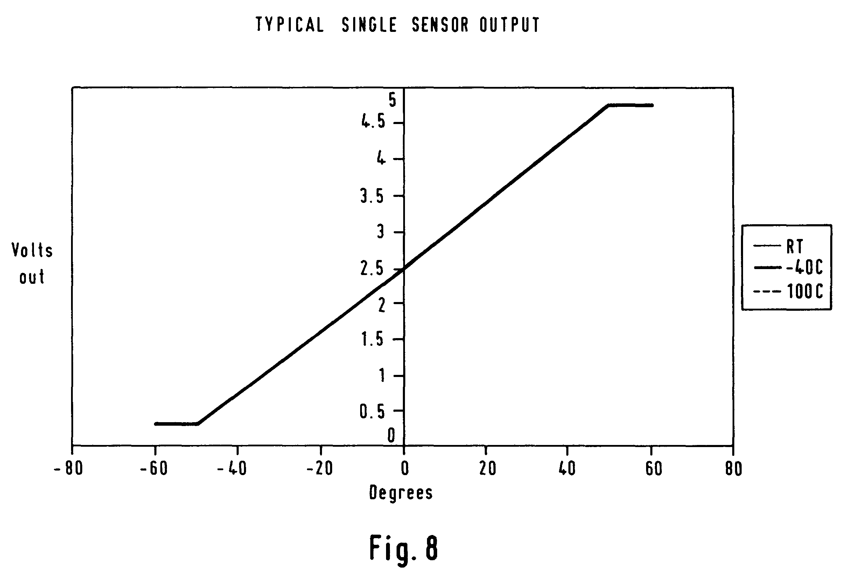

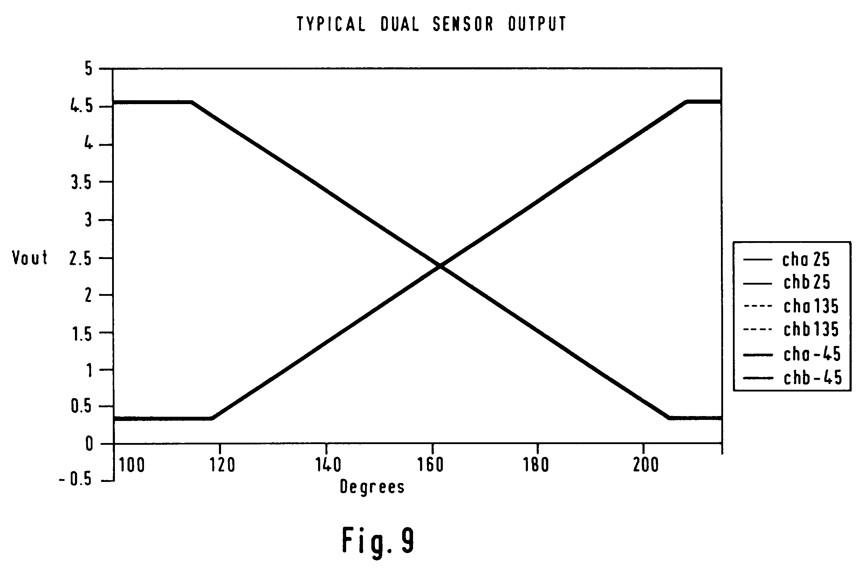

Alle Ausführungsformen des Wellenwinkelsensors haben gewisse strukturehe Merkmale gemeinsam. Die Leiterplatte der MR-Schaltung enthält ein Paar Brückenschaltungen mit Sensorelementen, die magnetoresistives Permalloy-Material zum Erfassen des Magnetfelds umfassen. Die Brückenschaltungen sind relativ zueinander um 45° gedreht, um das Äquivalent von Sinus- und Cosinus-Maßen des von dem Magneten produzierten Magnetfelds in dem Boden der Magnetwelle bereitzustellen. Das Sensorausgangssignal ist in den Kurven von Figuren 8 und 9 gezeigt. Dieser Magnet ist ein rechtwinklig geformter Magnet mit einem einzelnen Nordpol und einem einzelnen Südpol. Der Magnet der Magnetwelle kontaktiert den Boden des zylindrischen Hohlraums bzw. des zylindrischen Napfs der Basis, um bei Drehung der Welle relativ zu dem Hohlraum daraufzugleiten. Die Basis ist aus einem mit faserförmigem Glas gemischten Kunststoffmaterial mit dem chemischen Namen Polybutylenterephthalat hergestellt. Dieser Kunststoff ist gegenüber Feuchtigkeit widerstandsfähig und temperaturstabil, was für die Kraftfahrzeugumgebung ideal ist. Ein Merkmal bei der Verwendung dieses Kunststoffmaterials ist die Tatsache, daß Magnetfeldlinien des Magneten der Magnetwelle gerade durch den Boden des zylindrischen Hohlraums gehen können, um das magnetoresistive Material in den Sensorelementen zu sättigen.

Der Vorteil der Verwendung des Winkelsensors der Erfindung im Vergleich zu anderen Sensoren des Stands der Technik kann hinsichtlich der Theorie der Funktionsweise des Winkelsensors der Erfindung verstanden werden. Dies kann durch Vergleich der Funktionsweise eines magnetoresistiven Sensors mit einem Hall-Effekt-Magnetfeldsensor erklärt werden. Es gibt eine wichtige Unterscheidung zwischen der Verwendung eines Hall-Effekt-Magnetfeldsensors und dem magnetoresistiven Sensor. Der Hall-Effekt-Sensor gibt ein Signal mit einer Amplitude aus, das gegenüber der Amplitude des auf den Sensor auftreffenden Magnetfelds sehr empfindlich ist. Das von dem magnetoresistiven Sensor ausgegebene Signal hängt in erster Linie von der Richtung des Magnetfelds ab und wird durch die Größe des auftreffenden Magnetfelds nur geringfügig beeinflußt.

Infolgedessen ist die Anordnung des Hall-Effekt-Sensors relativ zu der Quelle des Magnetfelds kritisch, um ein richtiges Maß der Feldstärke zu erhalten. Irgendeine Abweichung von einer vorhergesehenen Stelle, wie dies bei normalen mechanischen Toleranzen oder Schwingungen bei der Verwendung des Kraftfahrzeugs auftreten könnte, würde in die Messung der Feldstärke einen Fehler einführen. Dieser Fehler reicht als Bruchteil der gesamten Feldstärke aus, um in die Messung des Winkels der Welle, die den Magneten hält, einen zu großen Fehler einzuführen. Im Gegensatz dazu liefert die Verwendung des magnetoresistiven Materials der vorliegenden Erfindung für die Messung des Wellenwinkels unabhängig davon, ob das magnetoresistive Material von einer gewünschten Stelle versetzt ist, entweder bezüglich Verschiebung in einer Richtung entlang der Wellenachse oder in einer Richtung quer zu der Wellenachse im wesentlichen die gleiche Genauigkeit.

Die Doppelbrückenschaltung des magnetoresistiven Materials ist im Handel erhältlich und wird von Philips hergestellt. Die insgesamt gestattete Drehung der Magnetwelle ist beispielsweise auf 90° der Gesamtbewegung durch die Anschläge an der Magnetwelle und die Vorsprünge der Feder in den Ausführungsformen des Drosselpositionssensors begrenzt. Die Feder dient auch der Funktion, die Magnetwelle hinsichtlich Drehwinkel vorzuspannen, um sicherzustellen, daß während eines Mitteilens einer Drehung durch eine externe Antriebswelle auf die Magnetwelle kein Spiel auftritt. Hinsichtlich der relativen Unempfindlichkeit des magnetoresistiven Sensors gegenüber einer Position relativ zu der Quelle eines Magnetfelds wird angemerkt, daß eine Nenndicke des Kunststoffbodens des zylindrischen Hohlraums die Funktion des magnetoresistiven Feldsensors nicht stört. Es kann sogar möglich sein, eine Dicke von bis zu einem Viertel Zoll zu haben, wobei diese Dicke die Lücke zwischen dem Sensor und dem Magneten darstellt. Bezüglich Meßfehlern, die der MR-Sensor erfährt, ist der Fehler in Graden proportional zu dem Quadrat eines Versatzes der Mittenachse eines MR-Array von der Sollstelle der Achse und ist umgekehrt proportional zu dem Quadrat des Durchmessers oder der Diagonalen des Array.

Bezüglich Figuren 8 und 9 wird angemerkt, daß bei der bevorzugten Ausführungsform der Erfindung ein Paar MR-Brückenschaltungen eingesetzt wird, die als redundante Sensoren dienen. Figur 8 stellt die Ausgangsspannung einer einzelnen Brückenschaltung als Funktion des Winkels für die Situationen von drei Umgebungen mit unterschiedlichen Temperaturen dar, nämlich Raumtemperatur (RT), -40 Grad Celsius und +100 Grad Celsius. Aufgrund der Temperaturstabilität der Sensorschaltung sind die drei Kurven für die drei verschiedenen Temperaturen so gut wie identisch.

Figur 9 zeigt den Fall für die beiden Sensorbrückenschaltungen, wobei eine der Schaltungen als Kanal a (cha) und die andere der beiden Sensorbrückenschaltungen als Kanal b (chb) dargestellt wird. Die Ausgangssignale der beiden Brückenschaltungen sind invertiert, um das Zeigen der Beziehung der Spannung als Funktion des Winkels für einen derartigen Kanal zu erleichtern. Drei verschiedene Temperaturbereiche sind ebenfalls angezeigt, nämlich +25°C, +135°C und -45°C, wobei aufgrund der Temperaturstabilität der MR-Brückenschaltungen die Kurven für jeden Kanal so gut wie identisch sind.

## Patentansprüche

1. Wellenwinkelsensor, der folgendes umfaßt:
eine Basis und eine von der Basis auf ihrer ersten Seite gestützte Schaltung, wobei die Basis aus einem Material hergestellt wird, das für ein Magnetfeld transparent ist, wobei die Basis einen Hohlraum für den Empfang des Endes einer drehbaren Welle aufweist, wobei der Hohlraum an einer zweiten Seite der Basis gegenüber der Schaltung angeordnet ist, wobei die Schaltung ein magnetoresistives Sensorelement enthält;
ein Gehäuse und eine Welle, die um eine Wellenachse drehbar ist, wobei das Gehäuse die Welle hält, wobei ein Ende davon bei Verbindung des Gehäuses mit der Basis innerhalb des Hohlraums drehbar angeordnet ist; und
einen mit dem Ende der Welle verbundenen Magneten, wobei der Magnet bei Platzierung des Endes der Welle und des Hohlraums ein Magnetfeld zu dem Sensorelement richtet, wobei Schaltung der Schaltung ein Signal ausgibt, das eine Drehorientierung des Magneten relativ zu der Basis angibt.

2. Sensor nach Anspruch 1, bei dem die gedruckte Schaltung ein Paar MR-Schaltungen enthält, wobei jede der Brückenschaltungen einen MR-Sensor enthält, wobei der MR-Sensor einer ersten der Brückenschaltungen relativ zu dem MR-Sensor der zweiten der Brückenschaltungen über der Drehachse der Welle um 45 Grad gedreht ist, wobei die gedruckte Schaltung orthogonale Komponenten des Drehwinkels der Welle liefert.

3. Sensor nach Anspruch 1, bei dem die Basis aus einem für ein Magnetfeld transparenten Material besteht.

4. Sensor nach Anspruch 3, bei dem das Material der Basis aus Polybutylenterephthalat besteht.

5. Sensor nach Anspruch 1, bei dem das Gehäuse eine aus Polybutylenterephthalat hergestellte Abdeckung enthält, wobei die Basis aus Polybutylenterephthalat hergestellt ist und die Welle aus mit Nylon und Glasfaser imprägniertem Teflon besteht, wobei zwischen der Abdeckung und der Basis eine Ultraschallschweißstelle vorliegt, die eine Drehung der Welle relativ zu der Basis gestattet.

6. Sensor nach Anspruch 1, bei dem das Ende der Welle ein erstes Ende ist und bei dem die Welle ein dem ersten Ende gegenüberliegendes zweites Ende umfaßt, wobei die Welle einen in dem zweiten Ende angeordneten Hohlraum zur Aufnahme eines externen Antriebselements in Form einer Welle mit einer Keilnut darin aufweist, wobei der Wellenhohlraum einen entsprechenden Keil zum Aufnehmen der Keilnut umfaßt.

7. Sensor nach Anspruch 6, weiterhin mit einer die Welle umgebenden Feder, wobei sich von der Feder Zähne zum Begrenzen eines Ausmaßes von Drehung der Welle erstrecken, wobei die Feder die Welle mit Federspannung an der Basis hält.

8. Verfahren zum Herstellen eines Wellenwinkelsensors, wobei der Wellenwinkelsensor folgendes umfaßt:
eine Basis und eine von der Basis auf ihrer ersten Seite gestützte Schaltung, wobei die Basis aus einem Material hergestellt wird, das für ein Magnetfeld transparent ist, wobei die Basis einen Hohlraum für den Empfang des Endes einer drehbaren Welle aufweist, wobei der Hohlraum an einer zweiten Seite der Basis gegenüber der Schaltung angeordnet ist, wobei die Schaltung ein magnetoresistives Sensorelement enthält;
ein Gehäuse und eine Welle, die um eine Wellenachse drehbar ist, wobei das Gehäuse die Welle hält, wobei ein Ende davon bei Verbindung des Gehäuses mit der Basis innerhalb des Hohlraums drehbar angeordnet ist; und
einen mit dem Ende der Welle verbundenen Magneten, wobei der Magnet bei Platzierung des Endes der Welle in dem Hohlraum ein Magnetfeld zu dem Sensorelement richtet, wobei Schaltung der gedruckten Schaltung ein Signal ausgibt, das eine Drehorientierung des Magneten relativ zu der Basis angibt;
wobei das Verfahren folgende Schritte umfaßt:
Konstruieren des Gehäuses mit einer Abdeckung, Herstellen der Abdeckung aus Polybutylenterephthalat, Herstellen der Basis aus Polybutylenterephthalat, Herstellen der Welle aus einer Zusammensetzung von Teflon, imprägniert mit Nylon und Glasfaser, und Ultraschallschweißen der Abdeckung an die Basis, wobei die Zusammensetzung der Welle ein Schweißen der Welle an die Basis und an die Abdeckung verhindert, wodurch eine Drehung der Welle relativ zu der Basis und zu der Abdeckung gestattet wird.
